# EUROPÄISCHE PATENTSCHRIFT

(11) **EP 1 963 151 B1**
(45) Veröffentlichungstag und Bekanntmachung des Hinweises auf die Patenterteilung: **16.12.2009**
(21) Anmeldenummer: 06806438.5
(22) Anmeldetag: 20.10.2006
(51) Int. Cl.: B60T 8/32, B60T 13/68, B60T 7/08, B60T 17/08

(54) **ELEKTROPNEUMATISCHE BREMSSTEUERUNGSEINRICHTUNG**
ELECTRO-PNEUMATIC BRAKE CONTROL DEVICE
DISPOSITIF ÉLECTROPNEUMATIQUE DE COMMANDE DE FREIN

(30) Priorität: 16.12.2005 DE 102005060225
(43) Veröffentlichungstag der Anmeldung: 03.09.2008
(73) Patentinhaber: WABCO GmbH, 30453 Hannover (DE)
(72) Erfinder: BENSCH, Uwe, 30161 Hannover (DE); FÖRSTER, Henning, 31171 Nordstemmen (DE); KIEL, Bernd-Joachim, 31515 Wunstorf (DE); MENZE, Wilfried, 31832 Springe (DE); ROSENDAHL, Hartmut, 30167 Hannover (DE); STRUWE, Otmar, 30163 Hannover (DE)
(74) Vertreter: Günther, Constantin
(86) Internationale Anmeldenummer: PCT/EP2006/010152
(87) Internationale Veröffentlichungsnummer: WO 2007/073791

(56) Entgegenhaltungen:
- EP-A- 1 571 061
- DE-C1- 19 953 805
- GB-A- 1 411 892
- US-A- 5 601 160

## Beschreibung

Die Erfindung betrifft eine elektropneumatische Bremssteuerungseinrichtung zur Steuerung einer Feststellbremse eines Fahrzeugs gemäß dem Oberbegriff des Anspruchs 1. Ferner betrifft die Erfindung eine elektrisch gesteuerte pneumatische Fahrzeugbremsanlage gemäß dem Oberbegriff des Patentanspruchs 8 mit einer derartigen Bremssteuerungseinrichtung. Schließlich betrifft die Erfindung ein Fahrzeug mit einer derartigen elektrisch gesteuerten pneumatischen Bremsanlage.

Eine gattungsgemäße Bremssteuerungseinrichtung sowie eine gattungsgemäße Bremsanlage sind aus EP 1 571 061 A1 bekannt.

Diese bekannte Bremsanlage weist neben einer Betriebsbremse, die mittels eines Bremspedals betätigbar ist, eine Feststellbremse (oftmals auch als Parkbremse oder Handbremse bezeichnet) auf, welche mittels eines elektrischen Signalgebers betätigbar ist.

Bei derartigen elektrisch gesteuerten Bremsanlagen ist ein Ausfall der elektrischen Energieversorgung ein problematisches Ereignis. Elektrische Komponenten, wie elektrische Steuerungssysteme und elektrisch betätigbare Magnetventile, können nicht mehr betätigt werden. Ferner fallen somit auch elektrische Signalgeber für die Feststellbremse aus. Es wurde daher in DE 199 53 805 C1 vorgeschlagen, durch Entlüften eines Federspeichers, welcher auf die Feststellbremse wirkt, automatisch eine Notbremsung einzuleiten, wenn die elektrische Energieversorgung ausfällt. Eine automatische Notbremsung ist jedoch nachteilig, da sie mit maximaler Bremswirkung erfolgt, was zu einer Gefährdung des nachfolgenden Straßenverkehrs führen kann.

EP 1 571 061 A1 hat daher eine Bremsanlage vorgeschlagen, mit der sich das Fahrzeug bei Ausfall der elektrischen Energieversorgung mittels einer pneumatischen Steuerung des Federspeicherteils des Federspeicher-Bremszylinders durch Betätigen des Bremspedals abstufbar abbremsen lässt.

Diese Lösung hat jedoch den Nachteil, dass die Federspeicherbremszylinder wieder mit Druck beaufschlagt werden, wenn das Bremspedal nicht mehr betätigt wird, so dass sich die Feststellbremse wieder löst. Daher kann mit diesem bekannten System das Fahrzeug nicht sicher abgestellt werden.

GB 1411892A offenbart ein Federspeicherbremszylinder, der im Falle eines Fehlers der Druckluftversorgung nicht schlagartig entlüftet wird, sondern über ein Ventil so entlüftet wird, dass die Bremsen allmählich betätigt werden. Hierdurch werden gefährliche Fahrzustände des Fahrzeugs vermieden.

Der Erfindung liegt daher die Aufgabe zugrunde, ein Fahrzeug auch bei Totalausfall der elektrischen Energieversorgung mit allenfalls geringer Beeinträchtigung des nachfolgenden Verkehrs sicher abstellen zu können.

Diese Aufgabe wird durch die in den Patentansprüchen 1, 8 und 9 angegebene Erfindung gelöst.

Die Erfindung hat den Vorteil, dass ein Fahrzeug auch bei einem Ausfall der Bordspannungsversorgung, insbesondere der elektrischen Energieversorgung der Bremssteuerungseinrichtung und dem damit verbundenen Ausfall einer elektropneumatisch betätigten Feststellbremse langsam eingebremst wird und sicher abgestellt werden kann. Dies ist insbesondere deshalb vorteilhaft, da bei einem Ausfall der elektrischen Energieversorgung des Fahrzeugs auch der Fahrzeugmotor abstirbt. Dies führt dazu, dass ein drucklufterzeugender Kompressor keine Druckluft mehr an die Druckluftvorratsbehälter für die Druckluftbremsen nachfördern kann. Daraus resultiert eine begrenzte Anzahl verbleibender Bremsungen mit der Betriebsbremse. Es ist daher wichtig, dass bei einem Ausfall der elektrischen Energieversorgung das Fahrzeug sicher in eine Parkstellung gebracht wird. Dank der Erfindung kann die Bremssteuerungseinrichtung bei Ausfall der elektrischen Energieversorgung in einem Betriebszustand gelangen, bei dem die infolge des Ausfalls der elektrischen Energieversorgung unbestromten Ventileinrichtungen die zum Federspeicherteil des Federspeicherbremszylinders führende Druckluftleitung gedrosselt entlüften. Durch die gedrosselte Entlüftung des Federspeicherteils wird die Feststellbremse langsam angelegt und somit das Fahrzeug langsam eingebremst. Der nachfolgende Verkehr wird somit nicht durch eine Notbremsung gefährdet. Insgesamt kann somit die Sicherheit des Straßenverkehrs erhöht werden.

Bei einer bevorzugten Ausführungsform weist die elektropneumatische Bremssteuerungseinrichtung eine luftmengenverstärkende Ventileinrichtung auf, bspw. ein Relaisventil, mit einem Einlass, der mit einer Druckluftleitung zu einem Druckluftvorrat verbunden ist, einem Auslass, der mit der Druckluftleitung zum Federspeicherteil des Federspeicherbremszylinders verbunden ist, und einem pneumatischen Steuereingang zur Zufuhr eines Steuerdruckes zum Steuern des Druckes am Auslass der luftmengenverstärkenden Ventileinrichtung. In dem besagten dritten Betriebszustand der Bremssteuerungseinrichtung, der bei einem Ausfall der elektrischen Energieversorgung aktiviert wird, wird der Steuerdruck automatisch gedrosselt abgesenkt. Die Entlüftung der Federspeicherbremszylinder erfolgt somit mittels einer Ventileinrichtung, die ihrerseits über einen Steuerdruck gesteuert wird. Das zur Steuerung einer derartigen Ventileinrichtung benötigte Steuervolumen ist im Verhältnis zu dem von der Ventileinrichtung gesteuerten Arbeitsvolumen klein. Diese Ventileinrichtung verstärkt daher die über die Steuerleitung zugeführte bzw. abgeführte Luftmenge, wobei diese verstärkte Luftmenge dem Federspeicherbremszylinder zugeführt bzw. von diesem abgeführt wird. Durch ein gedrosseltes Entlüften des Steuerdrucks dieser luftmengenverstärkenden Ventileinrichtung erfolgt somit auch eine gedrosselte Entlüftung des Federspeicherteils des Federspeicherbremszylinders.

Vorteilhafterweise ist ferner ein mit einer elektrischen Steuereinheit verbundenes und von dieser Steuereinheit gesteuertes elektrisch betätigbares Monostabilventil, bspw. ein 3/2-Wege-Magnetventil, vorgesehen, dessen Einlass mit der Druckluftleitung zum Druckluftvorrat und dessen Auslass mit dem Steuereingang der luftmengenverstärkenden Ventileinrichtung verbindbar ist. In einer bestromten Fahrstellung des Monostabilventils ist sein Auslass mit seinem Einlass und in einer unbestromten Parkstellung sein Auslass über einen dritten Anschluss des Monostabilventils mit einer gedrosselten Entlüftungseinrichtung verbunden. Das Monostabilventils ist dabei derart ausgebildet, dass es in einem unbestromten Zustand bspw. aufgrund einer Vorspannung einer Feder in die Parkstellung gebracht wird. Daher ist der Zustand des Monostabilventils bei einem Ausfall der elektrischen Energieversorgung definiert. Es findet dann nämlich eine gedrosselte Entlüftung des Steuerraums der luftmengenverstärkenden Ventileinrichtung statt, so dass die Feststellbremse mittels der Federspeicherbremszylinder langsam angelegt wird.

Bevorzugterweise ist die luftmengenverstärkende Ventileinrichtung als Relaisventil ausgebildet, wobei der Relaiskolben eine Öffnung aufweist, welche den Auslass des Relaisventils mit seinem Steuereingang gedrosselt verbindet. Diese Öffnung im Relaiskolben ist als Blende bzw. Bohrung vorgesehen. Sie bietet den Vorteil, dass eine an der gedrosselten Entlüftungseinrichtung vorgesehenen Blende mit einer bestimmten Mindestgröße ausgestaltet werden kann. Üblicherweise ist nämlich das Steuervolumen eines derartigen Relaisventils sehr klein und daher sehr schnell entlüftet. Eine schnelle Entlüftung kann aber zu einer abrupten Bremsung führen. Um eine schnelle Entlüftung zu vermeiden, müsste daher eine Blende an der entsprechenden Entlüftungseinrichtung sehr klein ausgestaltet sein. Dies kann jedoch zu Problemen führen. Insbesondere aufgrund einer Verschmutzung oder Vereisung dieser Blende besteht die Gefahr, dass infolge einer derartigen Verschmutzung bzw. Vereisung die Entlüftung nicht mehr ordnungsgemäß erfolgt. Durch die bei dieser besonders bevorzugten Ausführungsform vorgesehene Öffnung im Relaiskolben des Relaisventils wird das Arbeitsvolumen des Relaisventils über die Öffnung im Relaiskolben und somit auch über die gedrosselte Entlüftungseinrichtung langsam heruntergezogen. Das Steuervolumen des Relaisventils erscheint somit virtuell vergrößert. Dadurch kann die an der gedrosselten Entlüftungseinrichtung vorgesehene Blende mit einem größeren Querschnitt ausgestaltet sein. Hierdurch verhindert man ein Zusetzen bzw. eine Verstopfung der Entlüftungseinrichtung, bspw. durch Verschmutzung, Vereisung etc.

Weitere vorteilhafte Ausführungsformen ergeben sich aus den Unteransprüchen und aus den anhand der beigefügten Zeichnungen näher erläuterten Ausführungsbeispielen. In der Zeichnung zeigt:
- Fig. 1: eine Druckluftbremsanlage in schematischer Darstellung mit einer elektropneumatischen Bremssteuerungseinrichtung zur Steuerung einer Feststellbremse und
- Fig. 2: eine elektropneumatische Bremssteuerungseinrichtung zur Steuerung der Feststellbremse gemäß einem Ausführungsbeispiel der Erfindung.

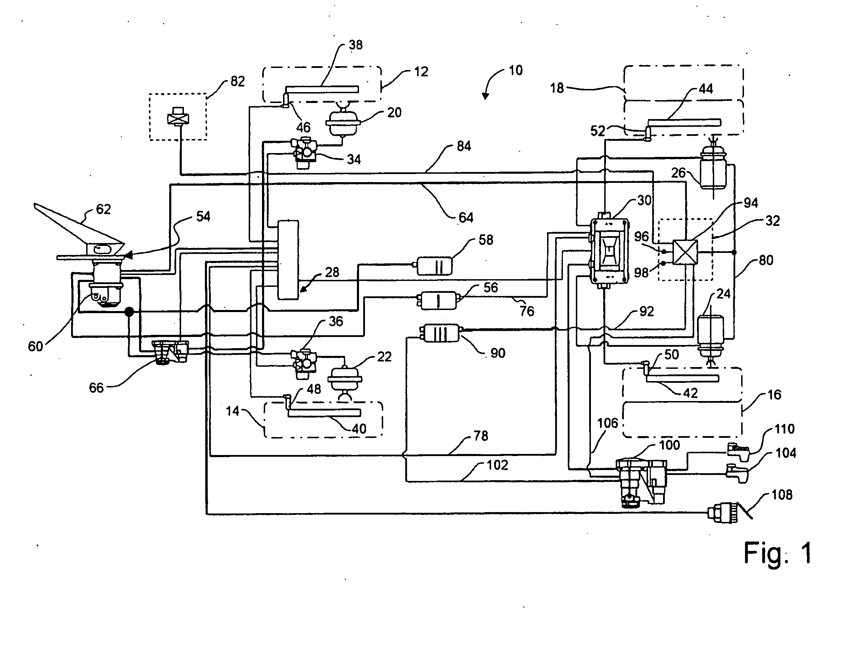

Anhand von Fig. 1 wird nachfolgend zunächst allgemein eine Druckluftbremsanlage erläutert, um darauf aufbauend die erfindungsgemäße elektropneumatische Einrichtung zur Steuerung einer Feststellbremse darzustellen, welche in einer derartigen Druckluftbremsanlage integriert ist.

Fig. 1 zeigt schematisch eine Druckluftbremsanlage 10 für ein Fahrzeug mit vier Rädern 12, 14, 16, 18. Die Bremsanlage 10 wird elektrisch gesteuert, d.h. die Bremsdruckzumessung zu Bremszylindern 20, 22, 24, 26 der Räder 12, 14, 16, 18 wird durch elektrische und elektronische Steuerelemente gesteuert. Die Bremszylinder 20, 22 der Vorderräder 12, 14 werden von einem Vorderachsbremsteuermodul 28 und die Bremszylinder 24, 26 der Hinterräder 16, 18 von einem Hinterachsbremssteuermodul 30 gesteuert. Die Bremszylinder 24, 26 der Hinterräder 16, 18 sind als kombinierte Betriebs- und Federspeicherbremszylinder ausgebildet, wobei der Federspeicherteil von einer elektropneumatischen Bremssteuerungseinrichtung zur Steuerung der Feststellbremse, nämlich einem Feststellbremsmodul 32 gesteuert wird.

Den Bremszylindern 20, 22, 24, 26 sind jeweils elektromagnetisch betätigbare Ventile zur Beeinflussung des Bremsdrucks vorgeschaltet. Für die Vorderräder 12 ,14 werden hierfür die Ventile 34, 36 verwendet. Für die Hinterräder 16, 18 sind die jeweiligen Ventile in dem Hinterachsbremssteuermodul 30 integriert.

An den Rädern 12, 14, 16, 18 sind jeweils Geschwindigkeitssensiermittel angeordnet, welche zur Ermittlung der jeweiligen Raddrehgeschwindigkeit dienen. Die Geschwindigkeitssensiermittel weisen jeweils ein mit dem Rad 12, 14, 16, 18 drehfest verbundenes Polrad 38, 40, 42, 44 auf, das mit einem induktiv arbeitenden Rad-Sensor 46, 48, 50, 52 elektromagnetisch gekoppelt ist.

Die Bremsanlage 10 weist ferner einen Bremswertgeber 54 auf, der einen Bremswunsch des Fahrers erfasst. Der Bremswertgeber 54 umfasst einen elektrischen und einen pneumatischen Teil. Der pneumatische Teil wird von einem ersten Druckluftvorratsbehälter 56 und einem zweiten Druckluftvorratsbehälter 58 mit Druckluft versorgt. Diese Druckluftvorratsbehälter 56, 58 dienen der Druckluftversorgung der Bremszylinder 20, 22 der Vorderräder 12, 14 bzw. der Bremszylinder 24, 26 der Hinterräder 16, 18. Der pneumatische Teil des Bremswertgebers 54 weist ein zweikreisig ausgeführtes Bremsventil 60 auf, das mechanisch mit einem Bremspedal 62 verbunden und mittels des Bremspedals 62 betätigbar ist. Bei Betätigung des Bremspedals 62 wird von dem Bremsventil 60 ein Drucksignal über eine Druckluftleitung 64 dem Feststellbremsmodul 32 zugeführt. Ein weiteres, von diesem ersten Drucksignal entkoppeltes zweites Drucksignal wird einer Vorderachsventileinrichtung 66 zugeführt.

Diese Vorderachsventileinrichtung 66 weist ein Vorderachsredundanzventil (nicht separat dargestellt) und eine Druckregelventileinrichtung (nicht separat dargestellt) auf, z.B. ein Proportional-Relaisventil, welches ein elektrisches Signal vom Vorderachsbremssteuermodul 28 in einen pneumatischen Bremsdruck umsetzt.

Vorderachsventileinrichtung 66 ist über eine Druckluftleitung mit dem zweiten Druckluftvorratsbehälter 58 verbunden. Sie ist ferner über eine elektrische Leitung mit dem Vorderachsbremssteuermodul 28 verbunden. Im Normalbetrieb wird mittels eines über die elektrische Leitung zugeführten elektrischen Signals ein Druck für die Bremszylinder 20, 22 ausgeregelt. In einem sog. Redundanzfall, bspw. bei einem Ausfall der elektrischen Energieversorgung für die elektrische Steuerung oder einem Ausfall der gesamten elektrischen Steuerung der Bremsanlage oder Ausfall einzelner Steuerungsmodule der Bremsanlage erfolgt eine Umschaltung auf das Drucksignal des Bremswertgebers 54. Mittels der Vorderachsventileinrichtung 66 kann Druckluft zu den Ventilen 34, 36 geleitet werden.

Das Hinterachsbremssteuermodul 30 ist über eine pneumatische Leitung 76 mit dem ersten Druckluftvorratsbehälter 56 verbunden. Das Hinterachsbremssteuermodul 30 weist ebenfalls eine Datenschnittstelle auf, die über eine elektrische Leitung 78 mit einer weiteren Datenschnittstelle des Vorderachsbremssteuermoduls 28 verbunden ist. Über diese Datenschnittstellen tauschen die Module 28, 30 Daten aus. Bspw. empfängt das Hinterachsbremssteuermodul 30 von dem Vorderachsbremssteuermodul 28 den mittels des Bremswertgebers 54 erfassten Bremswunsch des Fahrers und steuert analog wie das Vorderachsbremssteuermodul 28 den Bremsdruck in den Bremszylindern 24, 26 der Hinterräder 16, 18 über in dem Hinterachsbremssteuermodul 30 angeordnete Ventile. Die hierfür erforderliche Druckluft entnimmt das Hinterachsbremssteuermodul 30 dem ersten Druckluftvorratsbehälter 56.

Die Bremszylinder 24, 26 sind als kombinierte Bremszylinder, nämlich als kombinierte Federspeicher-/Membranzylinder ausgebildet. Die Bremszylinder 24, 26 weisen neben der Funktion von Membranzylindern, die etwa der Funktion der Bremszylinder 20, 22 entspricht, zusätzlich eine Federspeicherfunktion auf. Die Bremszylinder 24, 26 bestehen aus einem Membranteil, welcher pneumatisch mit der Betriebsbremsanlage der Hinterachse verbunden und mit dem eigentlichen Bremsdruck beaufschlagbar ist, sowie aus einem Federspeicherteil, welcher pneumatisch von dem Membranteil getrennt und über gesonderte Druckluftleitungen mit Druckluft beaufschlagbar ist. Der Federspeicherteil bildet einen Teil der Feststellbremse (häufig auch als Parkbremse bzw. Handbremse bezeichnet). Der Federspeicherteil beinhaltet die Federspeicherfunktion, welche bei Druckluftbeaufschlagung des Federspeicherteils einen Federspeicher vorspannt und dabei eine Bremswirkung der Federspeicherfunktion verhindert bzw. verringert, während sich bei Entlüftung des Federspeicherteils die Speicherfeder entspannt und dabei eine Bremswirkung im Rahmen der Federspeicherfunktion auf die mit dem jeweiligen Bremszylinder verbundene Bremse ausübt. Bremszylinder dieses Typs werden im vorliegenden Zusammenhang als Federspeicherbremszylinder bezeichnet.

Mittels dieser Federspeicherbremszylinder wird eine Feststellbremsfunktion realisiert, die auch bei Fehlen von Druckluft eine Bremsung bzw. ein Festellen des Fahrzeuges ermöglicht. Die Feststellbremsfunktion tritt auf, wenn der jeweilige Federspeicherteil der Federspeicherbremszylinder 24, 26 unterhalb eines Mindestdruckwertes entlüftet wird. Der Federspeicherteil der Bremszylinder 24, 26 ist über Druckluftleitungen 80 mit dem Feststellbremsmodul 32 pneumatisch verbunden, welches eine Drucksteuerung mit Hilfe elektronischer Steuerungsmittel erlaubt.

Ein manuell betätigbarer Feststellbremssignalgeber 82 ist über eine mehradrige elektrische Leitung 84 mit dem Feststellbremsmodul 32 verbunden. Die elektrischen Einrichtungen in dem Fahrzeug werden von einer nicht dargestellten elektrischen Energieversorgungseinrichtung, z.B. einer Fahrzeugbatterie, über entsprechende elektrische Leitungen mit elektrischer Energie versorgt.

Ein dritter Druckluftvorratsbehälter 90 ist über eine Druckluftleitung 92 mit dem Feststellbremsmodul 32 verbunden. Dieser Druckluftvorratsbehälter 90 dient der Druckluftversorgung des Feststellbremskreises und des Anhängers.

Das Feststellbremsmodul 32 verfügt ferner über einen Eingangsanschluss 94 für das über die Druckluftleitung 64 zugeführte Drucksignal. Das Feststellbremsmodul 32 weist ferner Anschlüsse 96, 98 für die elektrische Energieversorgung und eine Datenschnittstelle auf. Der Anschluss 96 für die Datenschnittstelle dient zur Verbindung mit einem in dem Fahrzeug vorgesehenen Datenbussystem, welches auch als Fahrzeugbus bezeichnet wird. Der Fahrzeugbus dient zum Datenaustausch zwischen verschiedenen in dem Fahrzeug vorgesehenen, eine elektronische Steuerung enthaltende Geräten, wie z.B. den Modulen 28, 30, die hierfür ebenfalls über jeweilige Datenschnittstellenanschlüsse mit dem Fahrzeugbus verbunden sind.

Das beschriebene Fahrzeug ist zur Ankopplung eines Anhängers geeignet. In diesem Zusammenhang wird das bisher beschriebene Fahrzeug auch als Zugfahrzeug und die Einheit aus Zugfahrzeug und Anhänger auch als Fahrzeugzug bezeichnet.

Die Bremsanlage 10 weist ferner ein Anhängersteuerventil 100 auf, welches zur Bremsdrucksteuerung eines ankoppelbaren Anhängers dient. Das Anhängersteuerventil 100 ist zur Druckluftversorgung über eine Druckluftleitung 102 mit dem dritten Druckluftvorratsbehälter 90 verbunden. Das Anhängersteuerventil 100 gibt die von dem Druckluftvorratsbehälter 90 bezogene Druckluft in Abhängigkeit von elektrischen und pneumatischen Steuersignalen gestuft über einen Druckluftanschluss 104 an die Bremsanlage eines angekoppelten Anhängers ab. Zur Steuerung dieser Druckabgabe weist das Anhängersteuerventil 100 einen elektrischen Signaleingang auf, der mit dem Hinterachsbremssteuermodul 30 verbunden ist und über den das Anhängersteuerventil 100 ein elektrisches Signal empfängt, das den Bremswunsch des Fahrers widerspiegelt. Alternativ kann der elektrische Signaleingang auch an das Vorderachsbremssteuermodul 28 angeschlossen sein. Ferner ist ein Drucksteuereingang zum Empfang von pneumatischen Steuersignalen vorgesehen. Der Drucksteuereingang ist über eine Druckluftleitung 106 mit dem Feststellbremsmodul 32 verbunden.

Ein elektrischer Steckanschluss 108 dient der Stromversorgung und Übermittlung von Datensignalen an den Anhänger. Ferner ist ein Druckluftversorgungsanschluss 110 zur Versorgung des Anhängers mit Vorratsdruck vorgesehen.

Die Bremsanlage 10 weist ferner eine (nicht dargestellte) Druckluftversorgungsanlage, bspw. einen von dem Fahrzeugmotor angetriebenen Kompressor, auf, mittels der die Druckluftvorratsbehälter 56, 58, 90 mit Druckluft befüllbar sind.

Die bisher beschriebene Bremsanlage entspricht in weiten Teilen der aus EP 1 571 061 A1 beschriebenen Bremsanlage. Die Funktionsweise dieser Bremsanlage ist jedoch vorteilhaft zum Verständnis des nachfolgend näher erläuterten, in diese Bremsanlage integrierten Feststellbremssteuermoduls gemäß einem Ausführungsbeispiel der Erfindung.

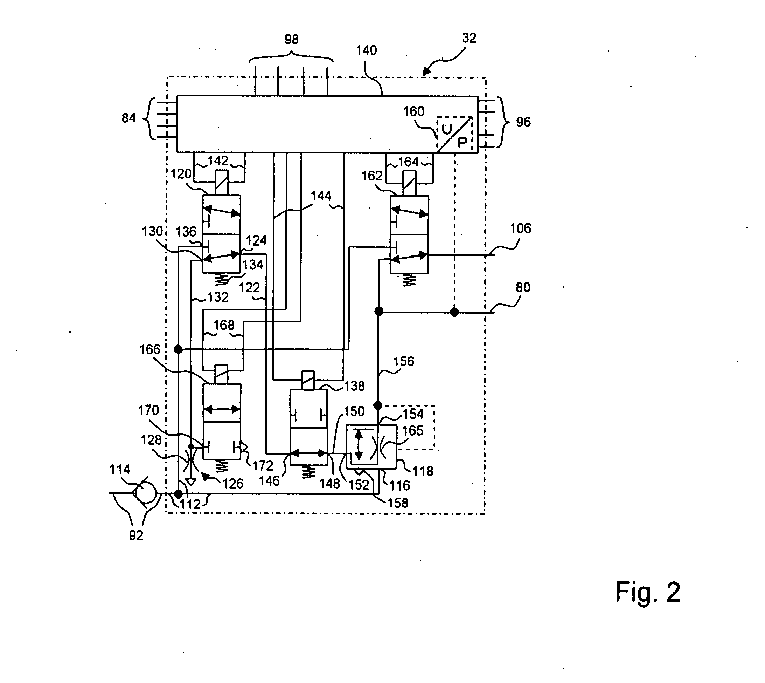

Fig. 2 zeigt den Aufbau eines Feststellbremssteuermoduls 32 gemäß einem Ausführungsbeispiel der Erfindung in schematischer Form.

Die Druckluftleitung 92 ist mit einer Druckluftzufuhrleitung 112 verbunden, welche Druckluft von dem dritten Druckluftversorgungsbehälter 90 Ventileinrichtungen innerhalb des Feststellbremssteuermoduls 32 mit Druckluft versorgt. In der Druckluftleitung 92 oder an einem eingangsseitigen Abschnitt der Druckluftzufuhrleitung 112 befindet sich ein Rückschlagventil 114, welches verhindert, dass im Falle eines unvorhergesehenen Druckabfalls in der Druckluftleitung 92 ein Druckabfall in den Druckluftleitungen innerhalb des Feststellbremssteuermoduls 32 auftritt. Ein unvorhergesehener Druckabfall wäre nämlich insofern nachteilig, da dies zu einem ebenfalls unvorhergesehenen Anlegen der Feststellbremse führen würde. Das Rückschlagventil 114 verhindert insbesondere im Falle eines Abreißens des Anhängers oder eine Leckage im Feststellbremskreis, dass die Federspeicher der Bremszylinder 24, 26 entlüftet werden. Ein derartiges Entlüften würde nämlich zu einem Einlegen der Feststellbremse führen, was im Falle eines Abreißens des Anhängers zu einer gefährlichen Notbremsung des Zugfahrzeuges führen würde.

Die Druckluftzufuhrleitung 112 ist mit dem Einlass 116 einer als Relaisventil 118 ausgebildeten luftmengenverstärkenden Ventileinrichtung verbunden und führt dieser Druckluft vom dritten Druckluftversorgungsbehälter 90 zu. Ferner ist ein Monostabilventil 120, nämlich ein 3/2-Wege-Magnetventil mit der Druckluftzufuhrleitung 112 und somit mit dem dritten Druckluftversorgungsbehälter 90 verbunden. Dieses Monostabilventil 120 weist eine erste Schaltstellung, auch Parkstellung oder Entlüftungsstellung genannt, auf, wie in Fig. 2 dargestellt. In dieser Stellung ist ein ausgangsseitiger mit einer Druckluftleitung 122 verbundener Auslass 124 des Monostabilventils 120 mit einer mittelbar oder unmittelbar mit der Atmosphäre verbundenen Entlüftungseinrichtung 126 verbunden. Die Entlüftungseinrichtung 126 weist eine Drossel 128 auf, die dazu führt, dass die Druckluft aus der Leitung 122 über das Monostabilventil 120 nur langsam entweichen kann. Diese Drossel 128 umfasst bspw. eine Lochblende, durch welche die Druckluft hindurchtreten muss. Hierdurch wird der Querschnitt verringert, so dass diese Blende einen Widerstand für die Druckluft darstellt, welche in der Park- bzw. Entlüftungsstellung des Monostabilventils 120 über die Druckluftleitung 122 über einen Entlüftungsanschluss 130 des Monostabilventils 120 und eine Druckluftleitung 132 zur Entlüftungseinrichtung 126 gelangt. Diese Park- bzw. Entlüftungsstellung wird von dem Monostabilventil 120 eingenommen, wenn dieses Ventil 120 unbestromt ist. Hierzu ist das Monostabilventil, bspw. mittels einer Feder 134, vorgespannt.

In einer zweiten Schaltstellung, auch Druckluftzufuhrstellung oder Fahrstellung genannt, verbindet das Monostabilventil 120 seinen Einlass 136 mit seinem Auslass 124, so dass in dieser Stellung die Druckluftzufuhrleitung 112 mit der Druckluftleitung 122 verbunden ist. Diese zweite Schaltstellung ist im störungsfreien Fahrbetrieb der Bremsanlage aktiviert. In dieser Stellung gelangt Druckluft über die Druckluftleitung 122 zum Relaisventil 118 unter Zwischenschaltung eines sog. Haltenventils 138.

Die Stellungen des Monostabilventils 120 werden über eine elektrische Steuereinheit 140 des Feststellbremssteuermoduls 32 geschaltet. Die elektrische Steuereinheit 140 ist zu diesem Zweck über elektrische Leitungen 142 mit dem Monostabilventil 120 elektrisch verbunden. Wird bspw. der Feststellbremssignalgeber 82 betätigt, veranlasst die elektrische Steuereinheit 140 durch Abgabe eines entsprechenden elektrischen Signals bzw. Stroms das Monostabilventil 120 in seine Fahrstellung zu schalten. Hierzu wird das Monostabilventil 120 dauerhaft bestromt. Sofern diese Bestromung abgeschaltet ist, gelangt das Ventil automatisch wieder in seine Parkstellung.

Das bspw. als 2/2-Wege-Magnetventil ausgebildete Haltenventil 138 ist ebenfalls über elektrische Leitungen 144 mit der elektrischen Steuereinheit 140 verbunden. Es ist daher über die elektrische Steuereinheit 140 elektromagnetisch betätigbar. Dieses Ventil 138 erlaubt in seiner in Fig. 2 dargestellten Schaltstellung ein Durchströmen von Druckluft von der Druckluftleitung 122, die mit einem Einlass 146 des Haltenventils 138 verbunden ist, zu einem Auslass 148 des Haltenventils 138, der über eine weitere Druckluftleitung 150 mit einem Steuereingang 152 des Relaisventils 118 verbunden ist.

In einer zweiten, nicht in Fig. 2 dargestellten Schaltstellung sperrt das Haltenventil 138 die Druckluftströmung ab. Zum Erzielen eines dosierten Durchströmens von Druckluft kann das Ventil 138, z.B. mit einem getakteten Signal über die elektrischen Leitungen 144 von der elektrischen Steuereinheit 140 angesteuert werden. Auf diese Weise kann der Steuereingang 152 des Relaisventils 118 mit einem vorgegebenen Druck beaufschlagt werden.

Das Haltenventil 138 ist bei einer alternativen Ausführungsform als Proportionalventil ausgebildet, d.h. es sind durch Ansteuerung des Elektromagneten dieses Ventils mit geeigneten elektrischen Signalen, z.B. getakteten Signalen, proportionale oder zumindest quasi proportionale Durchlassquerschnitte zwischen den Extremwerten der Durchlassstellung und der Absperrstellung einstellbar.

Das Relaisventil 118 gibt an seinem Auslass 154 einen Ausgangsdruck in eine Druckluftleitung 156 ab, der dem über die Druckluftleitung 150 an den Steuereingang 152 und somit in eine Steuerkammer des Relaisventils 118 eingesteuerten Druck entspricht. Das Relaisventil 118 entnimmt dabei die hierfür benötigte Druckluft aus der mit dem Einlass 116 des Relaisventils 118 verbundenen Druckluftzufuhrleitung 112. Eine etwaig notwendige Entlüftung der Druckluftleitung 156 erfolgt über einen mittelbar oder unmittelbar mit der Atmosphäre verbundenen Entlüftungsauslass 158 des Relaisventils 118.

Ausgangsseitig des Relaisventils 118 ist an der Druckluftleitung 156 optional ein Drucksensor 160 angeordnet, welcher ein dem Druck in der Druckluftleitung 156 entsprechendes elektrisches Signal an die elektrische Steuereinrichtung 140 abgibt und dort als lstdruckwert ausgewertet wird.

Die Druckluftleitung 156 ist mit der zu den Bremszylindern 24, 26 führenden Druckluftleitung 80 verbunden.

Die Druckluftleitung 156 ist ferner mit einem sog. Anhängerkontrollventil 162 verbunden. Dieses Ventil 162 ist als 3/2-Wege-Magnetventil ausgebildet. Mittels dieses Ventils kann eine sog. Anhängerkontrollfunktion aktiviert werden. Als Anhängerkontrollfunktion wird ein Zustand der Bremsanlage 10 bezeichnet, bei dem bei an sich angelegter Feststellbremsfunktion die Bremsen eines mit dem Zugfahrzeug verbundenen Anhängers gelöst werden, um dem Fahrer des Zugfahrzeuges eine Möglichkeit zu geben, zu überprüfen, ob bei abgestelltem Fahrzeug die Bremswirkung der Feststellbremse des Zugfahrzeuges alleine ausreicht, um den gesamten Fahrzeugzug am Wegrollen zu hindern. Eine derartige Überprüfung ist insbesondere bei Anhängern erforderlich, bei denen etwa infolge von schleichendem Druckverlust bei längerfristigem Abstellen des Fahrzeuges sich die Bremsen des Anhängers lösen könnten. Auch in diesem Fall muss sichergestellt sein, dass der Fahrzeugzug nicht wegrollt, was demzufolge von der Feststellbremse des Zugfahrzeuges bewirkt werden muss.

Das Anhängerkontrollventil 162 ist zur Betätigung über elektrische Leitungen 164 mit der elektrischen Steuereinheit 140 verbunden. In einer ersten, in Fig. 2 dargestellten Schaltstellung verbindet das Anhängerkontrollventil 162 die zu dem Anhängersteuerventil 100 führende Druckleitung 106 mit der Druckluftleitung 156. In seiner zweiten Schaltstellung verbindet das Anhängerkontrollventil 162 die Druckluftleitung 106 mit der Druckluftzufuhrleitung 112 bzw. der Druckluftleitung 92 und damit mit dem Druckluftvorrat des dritten Druckluftvorratsbehälters 90. In dieser zweiten Schaltstellung ist die Anhängerkontrollfunktion aktiviert. Hierbei wird der mit der Druckluftleitung 106 verbundene Drucksteuereingang des Anhängersteuerventils 100 mit Vorratsdruck beaufschlagt, was aufgrund einer invertierenden Funktion des Anhängersteuerventils 100 ein Lösen der Bremse des Anhängers bewirkt.

Das Relaisventil 118 weist einen nicht dargestellten Relaiskolben auf, der mit einer Bohrung bzw. Blende 165 versehen ist, welche den Auslass 154 des Relaisventils mit dem Steuereingang 152 gedrosselt verbindet. Hierdurch wird das Arbeitsvolumen des Relaisventils mit dem Steuervolumen verbunden, jedoch in einer gedrosselten Weise.

Bei einem Ausfall der elektrischen Energieversorgung gelangt das Monostabilventil 120 in seine in Fig. 2 dargestellte Park- bzw. Entlüftungsstellung und das Haltenventil 138 in seine in Fig. 2 dargestellte Durchlassstellung. Dies führt dazu, dass der Steuereingang 152 des Relaisventils 118 mit der Entlüftungseinrichtung 126 pneumatisch verbunden ist. Das Steuervolumen des Relaisventils wird somit über die Entlüftungseinrichtung 126 entlüftet. Da das Steuervolumen jedoch nur klein ist und das Steuervolumen nicht schlagartig entlüftet werden soll, gelangt über die in dem Relaiskolben vorgesehene Blende 165 Druckluft aus dem Arbeitsvolumen des Relaisventils 118 in seinen Steuerraum, so dass der Steuerdruck des Relaisventils 118 nur langsam abfallen kann. Mittels dieser Blende 165 im Relaiskolben wird folglich auch das Arbeitsvolumen langsam entlüftet.

Zum schnellen Entlüften der Federspeicher ist ein weiteres Ventil, nämlich das Entlüftenventil 166 vorgesehen. Dieses ist als elektromagnetisches Ventil ausgebildet, das wiederum über elektrische Leitungen 168 mit der elektrischen Steuereinheit 140 elektromagnetisch verbunden ist. Es ist daher über die elektrische Steuereinheit 140 elektromagnetisch betätigbar. Dieses Ventil 166 ist als 2/2-Wege-Magnetventil ausgebildet. Sein Einlass 170 ist mit der Druckluftleitung 132 verbunden und zwar in einem Abschnitt zwischen dem Entlüftungsanschluss 130 des Monostabilventils 120 und der Entlüftungseinrichtung 126. Sein Auslass 172 ist mittelbar oder unmittelbar mit der Atmosphäre verbunden.

In einem unbestromten Zustand befindet sich das Entlüftenventil 166 in der in Fig. 2 dargestellten Sperrstellung, d.h. der Einlass 170 ist nicht mit dem Auslass 172 verbunden, sondern von diesem abgesperrt. In einer bestromten, nicht in Fig. 2 dargestellten Stellung ist der Einlass 170 mit dem Auslass 172 des Entlfütenventils 166 verbunden. In dieser Entlüftungsstellung kann der Steuerraum des Relaisventils 118 schlagartig entlüftet werden, wenn das Haltenventil 138 sowie das Monostabilventil 120 in die in Fig. 2 dargestellten Schaltstellung geschaltet sind.

Durch eine Betätigung des Entlüftenventils 166 gelangt das Fahrzeug somit in eine Parkstellung und zwar durch schlagartiges Entlüften der Federspeicher, so dass die Feststellbremse schnell eingelegt wird.

Die Erfindung ermöglicht ein automatisches langsames und endgültiges Entlüften der Federspeicher der Feststellbremse bei einem Ausfall der elektrischen Energieversorgung des Fahrzeugs, so dass das Fahrzeug langsam über die Feststellbremse eingebremst werden kann. Eine Gefährdung des nachfolgenden Verkehrs durch eine Notbremsung kann somit weitestgehend verhindert werden.

## Patentansprüche

1. Elektropneumatische Bremssteuerungseinrichtung zur Steuerung einer Feststellbremse eines Fahrzeugs, bei dem druckluftbetätigbare Bremszylinder (20, 22, 24, 26) zur Betätigung von Radbremsen vorgesehen sind, wobei wenigstens ein Bremszylinder als Federspeicherbremszylinder ausgebildet ist und der Federspeicherteil des Federspeicherbremszylinders die Feststellbremse betätigt, wobei die Bremssteuerungseinrichtung (32) Ventileinrichtungen (118, 120, 166) aufweist, mittels der die Bremssteuerungseinrichtung (32) in mehrere Betriebszustände bringbar ist, wobei
a) in einem ersten Betriebszustand die Ventileinrichtungen (120, 166) zumindest teilweise bestrombar und derart schaltbar sind, dass eine Druckluftleitung (156) zum Federspeicherteil des Federspeicherbremszylinders belüftbar ist und
b) in einem zweiten Betriebszustand die Ventileinrichtungen (120, 166) zumindest teilweise bestrombar und somit derart schaltbar sind, dass diese Druckluftleitung (156) zum Federspeicherteil des Federspeicherbremszylinders schlagartig entlüftbar ist,
**dadurch gekennzeichnet, dass**
c) in einem dritten, bei Ausfall der elektrischen Energieversorgung der Bremssteuerungseinrichtung (32) aktivierbaren Betriebszustand die Ventileinrichtungen (120, 166) unbestromt derart schaltbar sind, dass die Druckluftleitung (156) zum Federspeicherteil des Federspeicherbremszylinders automatisch gedrosselt entlüftbar ist.

2. Bremssteuerungseinrichtung nach Anspruch 1, **gekennzeichnet durch** eine luftmengenverstärkende Ventileinrichtung (118) mit einem Einlass (116), der mit einer Druckluftzufuhrleitung (112) zu einem Druckluftvorrat (90) verbunden ist, einem Auslass (154), der mit der Druckluftleitung (156) zum Federspeicherteil des Federspeicherbremszylinders verbunden ist, und einem pneumatischen Steuereingang (152) zur Zufuhr eines Steuerdruckes zum Steuern des Druckes am Auslass (154) der luftmengenverstärkenden Ventileinrichtung (118), wobei im dritten Betriebszustand der Steuereingang (152) automatisch gedrosselt entlüftbar ist.

3. Bremssteuerungseinrichtung nach Anspruch 2, **gekennzeichnet durch** ein mit einer elektrischen Steuereinheit (140) verbundenes und von dieser Steuereinheit (140) gesteuertes elektrisch betätigbares Monostabilventil (120), dessen Einlass (136) mit der Druckluftleitung (112) zum Druckluftvorrat (90) und dessen Auslass (124) mit dem Steuereingang (152) der luftmengenverstärkenden Ventileinrichtung (118) verbindbar ist, wobei in einer bestromten Fahrstellung des Monostabilventils (140) sein Auslass (124) mit seinem Einlass (136) und in einer unbestromten Parkstellung sein Auslass (124) über einen dritten Anschluss (130) des Monostabilventils (120) mit einer gedrosselten Entlüftungseinrichtung (126) verbindbar ist.

4. Bremssteuerungseinrichtung nach Anspruch 3, **dadurch gekennzeichnet, dass** das Monostabilventil (120) ein 3/2-Wege-Magnetventil ist.

5. Bremssteuerungseinrichtung nach Anspruch 3 oder 4, **dadurch gekennzeichnet, dass** der dritte Anschluss des Monostabilventils (120) mit einem Einlass eines mit der elektrischen Steuereinheit (140) verbundenen und von dieser Steuereinheit (140) gesteuerten Entlüftenventils (166) verbindbar ist, dessen Auslass (172) mit einem Entlüftungsorgan verbunden ist,
wobei in einem bestromten Zustand des Entlüftenventils sein Einlass (170) mit seinem Auslass (172) verbindbar und in einem unbestromten Zustand des Entlüftenventils sein Einlass (170) von seinem Auslass (172) absperrbar ist.

6. Bremssteuerungseinrichtung nach einem der Ansprüche 2 bis 5, **dadurch gekennzeichnet, dass** die luftmengenverstärkende Ventileinrichtung (118) ein Relaisventil ist, dessen Relaiskolben eine Öffnung aufweist, welche den Auslass des Relaisventils (154) mit dem Steuereingang (152) gedrosselt verbindet.

7. Bremssteuerungseinrichtung nach einem der Ansprüche 2 bis 6, **dadurch gekennzeichnet, dass** sie ferner aufweist: ein mit der elektrischen Steuereinheit (140) verbundenes elektrisch betätigbares Haltenventil (138), das zwischen den Steuereingang (152) der luftmengenverstärkenden Ventileinrichtung (118) und den Auslass (124) des Monostabilventils (120) geschaltet ist und bei dem in einem unbestromten Zustand des Haltenventils (138) sein Einlass (146) mit seinem Auslass (148) verbindbar und in einem bestromten Zustand sein Einlass (146) von seinem Auslass (148) absperrbar ist.

8. Elektrisch gesteuerte pneumatische Fahrzeugbremsanlage mit einer Betriebsbremse und einer Feststellbremse, wobei die Betriebsbremse ein Bremspedal (62) und in Wirkverbindung mit dem Bremspedal (62) stehende druckluftbetätigbare Bremszylinder (20, 22, 24, 26) aufweist, wobei wenigstens ein Bremszylinder (20, 22, 24, 26) als Federspeicherbremszylinder ausgebildet ist und der Federspeicherteil des Federspeicherbremszylinders die Feststellbremse betätigt, und wobei die Feststellbremse einen Feststellbremssignalgeber (82) zum Betätigen der Feststellbremse durch Entlüften des Federspeicherteils des Federspeicherbremszylinders aufweist, **gekennzeichnet durch** eine elektropneumatische Bremssteuerungseinrichtung nach einem der Ansprüche 1 bis 7.

9. Fahrzeug mit einer elektrisch gesteuerten pneumatischen Bremsanlage nach Anspruch 8.

## Claims

1. Electropneumatic brake control device for controlling a parking brake of a vehicle, in which the brake cylinders (20, 22, 24, 26) actuable by compressed air are provided for the actuation of the wheel brakes, at least one brake cylinder being designed as a spring accumulator brake cylinder, and the spring accumulator part of the spring accumulator brake cylinder actuating the parking brake, the brake control device (32) having valve devices (118, 120, 166), by means of which the brake control device (32) can be brought into a plurality of operating states,
a) in a first operating state the valve devices (120, 166) being at least partially subjectable to current and being switchable in such a way that a compressed-air line (156) to the spring accumulator part of the spring accumulator brake cylinder can be aerated, and
b) in a second operating state the valve devices (120, 166) being at least partially subjectable to current and thus being switchable in such a way that this compressed-air line (156) to the spring accumulator part of the spring accumulator brake cylinder can be abruptly deaerated,
**characterized in that**
c) in a third operating state, activatable in the event of a failure of the electrical energy supply of the brake control device (32), the valve devices (120, 166) are switchable, without being subjected to current, in such a way that the compressed-air line (156) to the spring accumulator part of the spring accumulator brake cylinder can be automatically deaerated in a throttled manner.

2. Brake control device according to Claim 1,
**characterized by** a valve device (118) increasing the air quantity with an inlet (116) which is connected to a compressed-air supply line (112) to a compressed-air reservoir (90), with an outlet (154) which is connected to the compressed-air line (156) to the spring accumulator part of the spring accumulator brake cylinder, and a pneumatic control input (152) for the supply of the control pressure for controlling the pressure at the outlet (154) of the valve device (118) increasing the air quantity, in the third operating state the control input (152) being capable of being automatically deaerated in a throttled manner.

3. Brake control device according to Claim 2,
**characterized by** an electrically actuable monostable valve (120) which is connected to an electrical control unit (140) and is controlled by this control unit (140) and the inlet (136) of which is connectable to the compressed-air line (112) to the compressed-air reservoir (90) and the outlet (124) of which is connectable to the control input (152) of the valve device (118) increasing the air quantity, in a live operating position of the monostable valve (140) its outlet (124) being connectable to its inlet (136), and in a dead parking position its outlet (124) being connectable to a throttled deaeration device (126) via a third connection (130) of the monostable valve (120).

4. Brake control device according to Claim 3,
**characterized in that** the monostable valve (120) is a 3/2-way solenoid valve.

5. Brake control device according to Claim 3 or 4, **characterized in that** the third connection of the monostable valve (120) is connectable to an inlet of a deaeration valve (166) which is connected to the electrical control unit (140) and is controlled by this control unit (140) and the outlet (172) of which is connected to a deaeration member, in a live state of the deaeration valve its inlet (170) being connectable to its outlet (172), and in a dead state of the deaeration valve its inlet (170) being capable of being shut off from its outlet (172).

6. Brake control device according to one of Claims 2 to 5, **characterized in that** the valve device (118) increasing the air quantity is a relay valve, the relay piston of which has an orifice which connects the outlet of the relay valve (154) to the control input (152) in a throttled manner.

7. Brake control device according to one of Claims 2 to 6, **characterized in that** it has, furthermore, an electrically actuable holding valve (138) which is connected to the electrical control unit (140) which is inserted between the control input (152) of the valve device (118) increasing the air quantity and the outlet (124) of the monostable valve (120) and in which, in a dead state of the holding valve (138), its inlet (146) is connectable to its outlet (148), and in a live state its inlet (146) is capable of being shut off from its outlet (148).

8. Electrically controlled pneumatic vehicle brake system with a service brake and with a parking brake, the service brake having a brake pedal (62) and brake cylinders (20, 22, 24, 26) operatively connected to the brake pedal (62) and actuable by compressed air, at least one brake cylinder (20, 22, 24, 26) being designed as a spring accumulator brake cylinder, and the spring accumulator part of the spring accumulator brake cylinder actuating the parking brake, and the parking brake having a parking brake signal generator (82) for actuating the parking brake by the deaeration of the spring accumulator part of the spring accumulator brake cylinder, **characterized by** an electropneumatic brake control device according to one of Claims 1 to 7.

9. Vehicle having an electrically controlled pneumatic brake system according to Claim 8.

## Revendications

1. Dispositif électropneumatique de commande de frein pour commander un frein de stationnement d'un véhicule, dans lequel des cylindres de frein (20, 22, 24, 26) commandables par de l'air sous pression sont prévus pour actionner des freins de roue, au moins un cylindre de frein étant réalisé sous forme de cylindre de frein à ressort accumulateur, et la partie à ressort accumulateur du cylindre de frein à ressort accumulateur actionnant le frein de stationnement, le dispositif de commande de frein (32) présentant des dispositifs de soupape (118, 120, 166) au moyen desquels le dispositif de commande de frein (32) peut être amené dans plusieurs états de fonctionnement,
a) dans un premier état de fonctionnement, les dispositifs de soupape (120, 166) pouvant être au moins en partie parcourus par un courant et pouvant être commutés de telle sorte qu'une conduite d'air sous pression (156) allant à la partie à ressort accumulateur du cylindre de frein à ressort accumulateur puisse être ventilée,
b) dans un deuxième état de fonctionnement, les dispositifs de soupape (120, 166) pouvant être au moins en partie parcourus par un courant et pouvant être commutés de telle sorte que cette conduite d'air sous pression (156) allant à la partie à ressort accumulateur du cylindre de frein à ressort accumulateur puisse être désaérée brusquement,
**caractérisé en ce que**
c) dans un troisième état de fonctionnement pouvant être activé en cas de panne de l'alimentation électrique du dispositif de commande de frein (32), les dispositifs de soupape (120, 166) peuvent être commutés sans courant de telle sorte que la conduite d'air sous pression (156) allant à la partie à ressort accumulateur du cylindre de frein à ressort accumulateur puisse être désaérée automatiquement de manière étranglée.

2. Dispositif de commande de frein selon la revendication 1, **caractérisé par** un dispositif de soupape amplifiant les quantités d'air (118) avec une entrée (116), qui est connectée à une conduite d'alimentation en air sous pression (112) allant à un réservoir d'air sous pression (90), une sortie (154), qui est connectée à la conduite d'air sous pression (156) allant à la partie à ressort accumulateur du cylindre de frein à ressort accumulateur, et une entrée de commande pneumatique (152) pour l'alimentation d'une pression de commande pour commander la pression au niveau de la sortie (154) du dispositif de soupape amplifiant les quantités d'air (118), l'entrée de commande (152) pouvant être désaérée automatiquement de manière étranglée dans le troisième état de fonctionnement.

3. Dispositif de commande de frein selon la revendication 2, **caractérisé par** une soupape monostable (120) connectée à une unité de commande électrique (140) et pouvant être activée électriquement par commande par cette unité de commande (140), dont l'entrée (136) peut être connectée à la conduite d'air sous pression (112) allant au réservoir d'air sous pression (90) et dont la sortie (124) peut être connectée à l'entrée de commande (152) du dispositif de soupape amplifiant les quantités d'air (118), dans lequel, dans le cas d'une position de conduite de la soupape monostable (140) parcourue par un courant, sa sortie (124) peut être connectée à son entrée (136), et dans une position de stationnement sans courant, sa sortie (124) peut être connectée par le biais d'un troisième raccord (130) de la soupape monostable (120) à un dispositif de désaérage étranglé (126).

4. Dispositif de commande de frein selon la revendication 3, **caractérisé en ce que** la soupape monostable (120) est une électrovanne à 3/2 voies.

5. Dispositif de commande de frein selon la revendication 3 ou 4, **caractérisé en ce que** le troisième raccord de la soupape monostable (120) peut être connecté à une entrée d'une soupape de désaérage (166) connectée à l'unité de commande électrique (140) et commandée par cette unité de commande (140), dont la sortie (172) est connectée à un organe de désaérage, dans lequel, dans un état parcouru par un courant de la soupape de désaérage, son entrée (170) peut être connectée à sa sortie (172), et dans un état non parcouru par un courant de la soupape de désaérage, son entrée (170) peut être isolée de sa sortie (172).

6. Dispositif de commande de frein selon l'une quelconque des revendications 2 à 5, **caractérisé en ce que** le dispositif de soupape amplifiant les quantités d'air (118) est une soupape-relais, dont le piston de relais présente une ouverture qui relie de manière étranglée la sortie de la soupape-relais (154) à l'entrée de commande (152).

7. Dispositif de commande de frein selon l'une quelconque des revendications 2 à 6, **caractérisé en ce qu'**il présente en outre : une soupape de maintien (138) actionnable électriquement et connectée à l'unité de commande électrique (140), qui est montée entre l'entrée de commande (152) du dispositif de soupape amplifiant les quantités d'air (118) et la sortie (124) de la soupape monostable (120), et dans lequel, dans un état non parcouru par un courant de la soupape de maintien (138), son entrée (146) peut être connectée à sa sortie (148), et dans un état parcouru par un courant, son entrée (146) peut être isolée de sa sortie (148).

8. Installation de frein de véhicule pneumatique commandée électriquement, comprenant un frein de service et un frein de stationnement, le frein de service présentant une pédale de frein (62) et des cylindres de frein (20, 22, 24, 26) pouvant être actionnés par de l'air sous pression et en liaison fonctionnelle avec la pédale de frein (62), au moins un cylindre de frein (20, 22, 24, 26) étant réalisé sous forme de cylindre de frein à ressort accumulateur, et dans lequel le frein de stationnement présente un générateur de signaux de frein de stationnement (82) pour actionner le frein de stationnement par désaérage de la partie à ressort accumulateur du cylindre de frein à ressort accumulateur, **caractérisée par** un dispositif de commande de frein électropneumatique selon l'une quelconque des revendications 1 à 7.

9. Véhicule comprenant une installation de frein pneumatique commandée électriquement selon la revendication 8.
